# EUROPÄISCHE PATENTSCHRIFT

(11) **EP 1 137 860 B1**
(45) Veröffentlichungstag und Bekanntmachung des Hinweises auf die Patenterteilung: **09.06.2004**
(21) Anmeldenummer: 99955876.0
(22) Anmeldetag: 23.10.1999
(51) Int. Cl.: E05B 1/00, E05B 65/20, H01H 13/06

(54) **ÄUSSERER TÜRGRIFF, INSBESONDERE FÜR FAHRZEUGE, MIT EINER BÜGEL-HANDHABE UND MIT EINEM DARIN INTEGRIERTEN DRUCKBETÄTIGER**
OUTER DOOR HANDLE, ESPECIALLY FOR MOTOR VEHICLES, WITH A BOW-TYPE HANDLE AND WITH A PRESSURE-ACTUATED ELEMENT INTEGRATED THEREIN
POIGNEE EXTERIEURE NOTAMMENT DE PORTIERE DE VEHICULE COMPRENANT UNE POIGNEE EN FORME D'ETRIER DOTEE D'UN ACTIONNEUR PAR PRESSION INTEGRE

(30) Priorität: 10.12.1998 DE 19856902
(43) Veröffentlichungstag der Anmeldung: 04.10.2001
(73) Patentinhaber: HUF HÜLSBECK & FÜRST GMBH & CO. KG, 42551 Velbert (DE)
(72) Erfinder: KLEIN, Helmut, D-42549 Velbert (DE); MÜLLER, Ulrich, D-42549 Velbert (DE)
(74) Vertreter: Mentzel, Norbert, Dipl.-Phys.
(86) Internationale Anmeldenummer: PCT/EP1999/008044
(87) Internationale Veröffentlichungsnummer: WO 2000/034604

(56) Entgegenhaltungen:
- DE-C- 4 208 087
- DE-U- 1 944 225
- FR-A- 1 401 167
- FR-A- 2 587 833

## Beschreibung

Die Erfindung richtet sich auf einen Türgriff der im Oberbegriff des Anspruches 1 angegebenen Art. Bei dem bekannten Türgriff wird der Druckbetätiger als einheitlicher Kunststoffkörper in Form einer Kappe ausgebildet, der in eine Aussparung am Ende der Bügel-Handhabe eingelassen ist.

Bei einem bekannten Türgriff (DE 18 42 237 U) wird ein kappenförmiger Druckknopf von einer Druckfeder teleskopartig aus einer Bohrung im Türgriff herausgedrückt, wofür eine am inneren Stirnende des Druckknopfs vorgesehene Druckfeder maßgeblich ist. Der Mantelbereich des Druckknopfs ist im unteren Bereich mit einer Kunststoffhülse ummantelt, welche die Gleitführungen des Druckknopfs verbessern und Riffenbildungen im Druckknopf vermeiden sollen.

Außerdem ist es bekannt (DE 19 44 225 U) zur teleskopartigen Führung eines Druckknopfs im Bereich eines Handgriffs eine Dichtung aus elastomerem Material zu verwenden. Dieses Dichtungsmaterial ist an einem Türausschnitt durch ringförmige Plättchen befestigt. Auch in diesem Fall entsteht die axiale Beweglichkeit des Druckknopfs durch gesonderte Druckfedern, die sich am inneren Druckknopfende abstützen.

Es gibt auch Druckbetätiger in Türgriffen, deren Rückstellkraft durch das Kunststoffmaterial der Kappe selbst erzeugt wird. Solche Kappen mit integrierter Rückstellwirkung sind fertigungsmäßig und montagemäßig günstig.

Bei dem bekannten Türgriff ist der Druckbetätiger schwergängig, wenn man bemüht ist, einen kratzfesten, harten Kunststoff zum Aufbau der Kappe zu verwenden. Würde man dagegen einen weicheren Kunststoff für die Ausbildung des Druckbetätigers benutzen, so würde sich dessen gutes Aussehen nach kurzer Zeit durch Kratzer oder Beulen nachteilig verändern.

Der Erfindung liegt die Aufgabe zugrunde einen Druckbetätiger der im Oberbegriff des Anspruches 1 angegebenen Art zu entwickeln, der auch nach längerem Gebrauch sein gutes Aussehen und seine Funktionsfähigkeit beibehält, aber dennoch leichtgängig zu betätigen ist. Dies wird erfindungsgemäß durch die im Anspruch angegebenen Maßnahmen erreicht, denen folgende besondere Bedeutung zukommt.

Der erfindungsgemäße Druckbetätiger besteht aus einem Kombieinsatz, der aus zwei materialmäßig unterschiedlichen Komponenten zusammengesetzt ist. Die eine Komponente, die nachfolgend kurz "Hartkomponente" genannt werden soll, befindet sich mindestens im Zentralbereich des äußeren Kappenbodens und besteht aus hartem, kratzfestem Kunststoffmaterial. Demgegenüber ist die zweite Komponente aus im Wesentlichen weichem, formelastischem Kunststoff gebildet, der zwar die ganze Kappe ausbildet, aber im Bereich des Kappenbodens nur auf der Innenfläche, unterhalb der Hartkomponente verläuft. Diese zweite Komponente soll daher nachfolgend "Weichkomponente" genannt werden. Der Druckbetätiger lässt sich in einem zweistufigen Spritzgussverfahren aus diesen beiden Komponenten leicht und exakt herstellen. Weil die Weichkomponente ausschließlich im Bereich des Kappenmantels angeordnet ist, ergibt sich eine gute Druckbetätigungsmöglichkeit des montierten Kombineinsatzes. Es werden die guten elastischen Wirkungen der Weichkomponente dabei genutzt. Der Druckknopfbetätiger ist sehr leichtgängig. Die Hartkomponente dagegen ist in jener Zone des Kappenbodens angeordnet, wo die Druckbetätigung ausgeübt wird. Sie dient zur Verstärkung des Kappenbodens, was für die Betätigung des elektrischen Schalters sehr günstig ist. Die Halterung und Arretierung des Kombieinsatzes in der Aussparung der Bügel-Handhabe ist trotz der Verwendung der Weichkomponente in dieser Zone bei der Erfindung nicht gefährdet, weil diese an sich weichen Teile des Kombieinsatzes durch radiale Anlageflächen, axiale Schultern u. dgl. vom festen Material der Bügel-Handhabe an den gewünschten Stellen abgestützt ist. Die Ausbildung von Rastelementen durch die Weichkomponente ist für eine präzise Steckmontage und Arretierung günstig.

Weitere Vorteile der Erfindung ergeben sich aus den Unteransprüchen, der nachfolgenden Beschreibung und den Zeichnungen. In den Zeichnungen ist die Erfindung in einem Ausführungsbeispiel dargestellt. Es zeigen:
- Fig. 1: die Draufsicht auf die Bügel-Handhabe eines demontierten Türgriffs,
- Fig. 2,: in starker Vergrößerung, einen Querschnitt durch den Endbereich der Bügel-Handhabe von Fig. 1 in Blickrichtung der dortigen Schnittlinie II - II und
- Fig. 3,: in einer zur Fig. 2 analogen Darstellung, ein Schnitt durch das gleiche Ende der Bügel-Handhabe in Blickrichtung der Schnittlinie III - III von Fig. 1.

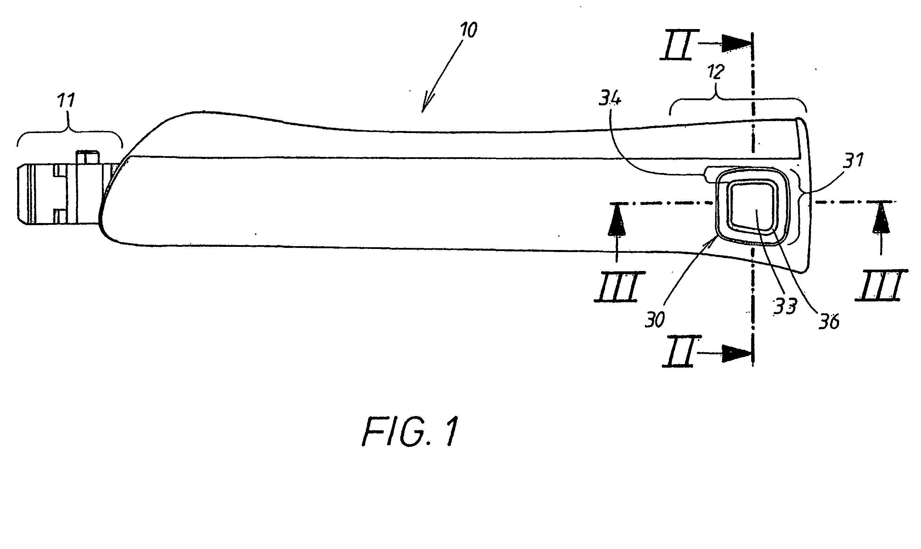

Fig. 1 zeigt lediglich die demontierte Bügel-Handhabe 10 eines äußeren Türgriffs, der für Automobile bestimmt ist. Es handelt sich hier um einen Zieh-Türgriff, wo das eine Bügelende 11 schwenkbar an einem Träger der Tür drehgelagert ist und mit seinem anderen Bügelende 12 gegen eine Federlast herausziehbar ist. In diesem Bügelende 12 befindet sich eine Aussparung 13, in welcher ein Druckbetätiger 15 angeordnet ist, der auf einen dort angeordneten elektrischen Schalter 16 einwirkt. Der Schalter 16 hat einen Druckknopf 17, der zur Ansteuerung der elektrischen Kontakte im Sinne des Doppelpfeils 18 betätigbar ist. Dies erfolgt durch eine manuelle Druckbetätigung 15 im Sinne des eingezeichneten Pfeils 14. Dieser Druckbetätiger 15 ist bei der Erfindung in besonderer Weise ausgebildet.

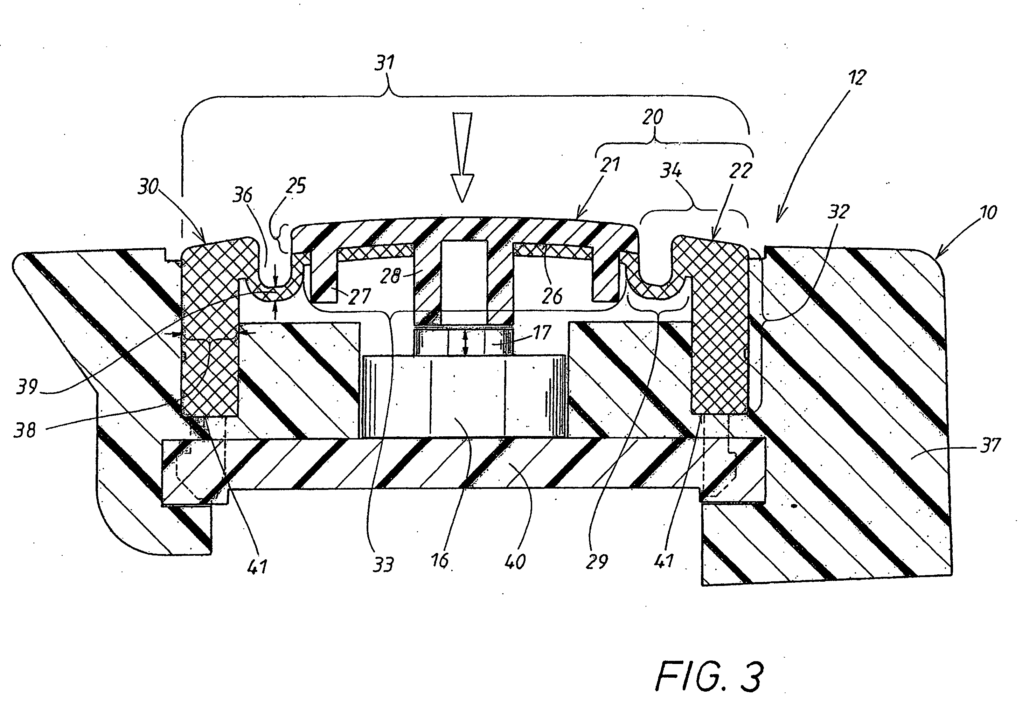

Der Druckbetätiger 15 ist ein aus zwei unterschiedlichen Komponenten 21, 22 zusammengesetzter Steckeinsatz, der nachfolgend kurz "Kombieinsatz" bezeichnet werden soll und das Bezugszeichen 20 besitzt. Wie bereits eingangs erwähnt wurde, besteht die eine Komponente 21 aus einem harten, kratzfesten Kunststoffmaterial 23, und soll "Hartkomponente" dieses Kombieinsatzes 20 bezeichnet werden. Demgegenüber ist die andere Komponente 22 aus weichem, formelastischen Kunststoff 24 gebildet und wird daher "Weichkomponente" genannt. Dieser Kombieinsatz 20 hat eine besondere Form, die anhand der Fig. 3 erläutert werden soll.

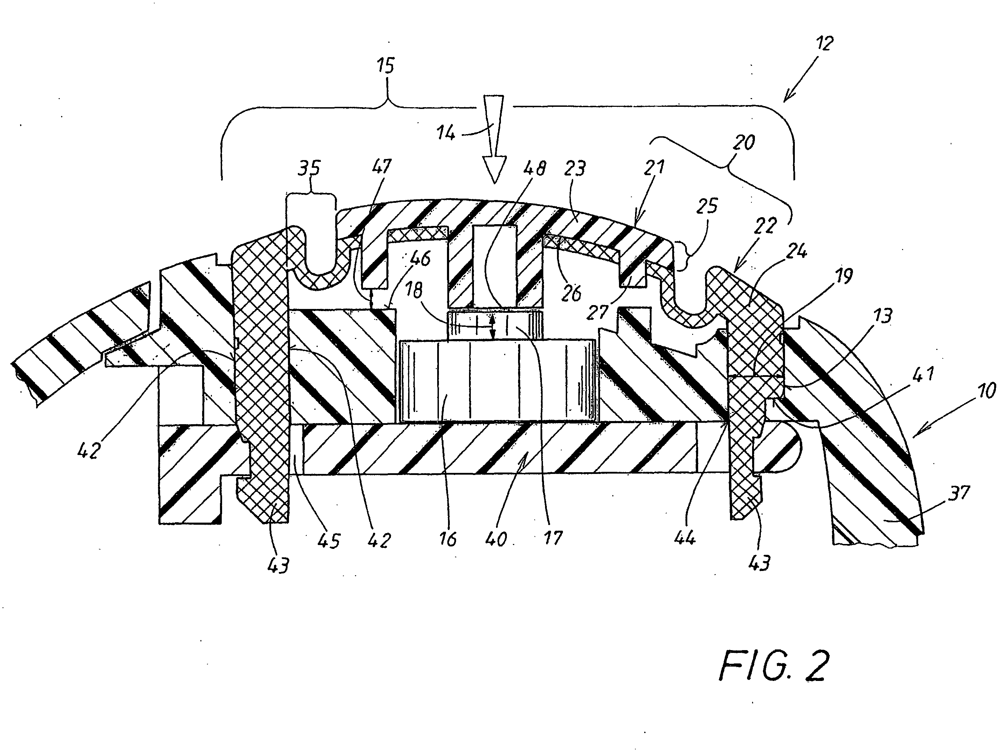

Der Kombieinsatz 20 hat Kappenform 30, die sich grundsätzlich in einen Kappenboden 31 und einen Kappenmantel 32 gliedern lässt. Die Draufsicht auf Fig. 1 zeigt, dass der Kappenboden 31 einen Rechteck-Umriss aufweist, wenn man von Rundungen und Krümmungen absieht. Während der Kappenmantel 32 ausschließlich aus der Weichkomponente 22 besteht, ist der Kappenboden 31 sehr komplex gestaltet. Der Zentralbereich 33 der Kappe 30 ist auf seiner Außenseite mit einer Platte der Hartkomponente 21 überdeckt, welche die Druckbetätigungsstelle für den elektrischen Schalter bestimmt. Bereits die Innenfläche 26 dieser Platte 25 ist mit einer Schicht aus der Weichkomponente 22 belegt. Die Platte 25 ist mit randseitigen und/oder zentralen Elementen 27, 28 versehen, welche die Wandschicht der darunterliegenden Weichkomponente 22 durchragen. Auf diese Weise kommt eine formschlüssige Verbindung der beiden Komponenten 21, 22 zustande, wie in Fig. 3 verdeutlicht ist. Die randseitigen Elemente 27 sind Anschlagelemente, die mit entsprechenden, aus Fig. 2 erkennbaren Schultern 46 in der Bügel-Handhabe 10 bei der Betätigung 14 der Platte 25 zusammenwirken. Diese Anschläge 27, 46 sind abgestimmt mit dem zentralen Element 28. Es handelt sich dabei um einen als Betätiger ausgebildeten zentralen Schaft, der mit dem Druckknopf 17 des elektrischen Schalters 16 axial ausgerichtet ist. Zwischen dem Schaft 28 und dem oberen Stirnende des Druckknopfs 17 besteht im Ruhezustand ein aus Fig. 2 erkennbarer Spalt 48. Dieser Spalt 48 ist geringer als der ebenfalls aus Fig. 2 erkennbare Höhenabstand 47 zwischen dem Stirnende der Anschlagelemente und der zugehörigen Schulter 46.

Bereits die in Fig. 3 mit 34 gekennzeichnete Randzone des Kappenbodens 31 ist ausschließlich aus der Weichkomponente 22 gebildet und umschließt die Platte 25 aus der Hartkomponente 21 nach Art eines Rahmens allseitig, wie aus Fig. 1 zu erkennen ist. Gemäß dem Axialschnitt von Fig. 3 besitzt der Übergangsbereich 35 zwischen dem Umriss der Platte 25 und dem von der Weichkomponente 22 gebildeten Kappenrest 34, 32 ein verkröpftes Profil 29, das im vorliegenden Fall U-Form hat. Es entsteht eine nach oben weisende offene Rinne 36, welche die Platte 35 ringförmig umschließt, wie am besten aus Fig. 1 zu erkennen ist. Dieses U-Profil 29 hat eine deutlich geringere Wandstärke 39 als der Mantelstärke 38 des benachbarten Kappenmantels 32 entspricht. Dieses verkröpfte Profil 29 wirkt dann als besonders elastisch nachgiebige Rückstellfeder, welche für die aus Fig. 3 ersichtliche definierte Ausgangslage des Kappenbodens 31 sorgt.

Der Kappenmantel 32 besteht also ausschließlich aus der Weichkomponente 22, die aber durch die besondere Profilierung der Aussparung 13 im Bügelende 12 umschlossen ist. Die Aussparung 13 ist nämlich als ringförmige Kammer ausgebildet, deren aus Fig. 2 erkennbare lichte Kammerweite 19 der vorerwähnten Mantelstärke 38 des Kappenmantels 32 angepasst ist. Die dortige Weichkomponente 32 sitzt im Presssitz in der ringförmigen Kammer 13. Die in Fig. 2 gezeigte Kammer 13 besitzt also im Bügelmaterial 37 definierte radiale Anlageflächen 42 sowie axiale Schultern 41 für den weichen Kappenmantel 32.

Am Kappenmantel 32 sind Rastelemente vorgesehen, die, ausweislich der Fig. 2, aus radial federnden Haken 43 bestehen. Im Grund der ringförmigen Kammer 13 ist ein Durchbruch 44 vorgesehen, aus welchem die Haken 43 der montierten Kappe 30 axial herausragen und in einer Sperrplatte 40 verankert sind. Die Sperrplatte 40 liegt flächig an einer rückseitigen Aussparung auf der gegenüberliegenden Seite der ringförmigen Kammer 13 an und besitzt den Haken 43 zugeordnete komplementäre Löcher 45. Diese lassen beim Kuppeln eine radiale elastische Ausweichbewegung der Haken 43 zu. Der Hakenkopf hintergreift den Lochrand. Durch die erwähnten axialen Schultern 41 einerseits und die eingeschnappten Haken 43 andererseits wird der Kombieinsatz 20 formschlüssig in der Kammer 13 gehalten. Dies sichert die Lage der Sperrplatte 40. Die Sperrplatte 40 ist Träger des elektrischen Schalters 16, der auf dessen nach außen weisenden Plattenseite angeklebt ist. Die Sperrplatte 40 kann randseitig, wie Fig. 3 zeigt, formschlüssig in entsprechenden Ausnehmungen des Bügelmaterials 37 gehalten sein und zwar sowohl vor als auch während und nach der Montage des Steckeinsatzes 15 in der Bügel-Handhabe.

### Bezugszeichenliste :

- 10: Bügel-Handhabe
- 11: erstes Bügelende von 10
- 12: zweites Bügelende von 10
- 13: Aussparung in 12, ringförmige Kammer
- 14: Druckbetätigungspfeil von 15
- 15: Druckbetätiger in 12
- 16: elektrischer Schalter
- 17: Druckknopf von 16
- 18: Doppelpfeil der Knopfbewegung von 17
- 19: lichte radiale Weite von 13
- 20: Kombieinsatz für 15
- 21: erste Komponente von 20, Hartkomponente
- 22: zweite Komponente von 20, Weichkomponente
- 23: harter, kratzfester Kunststoff für 21
- 24: formfester, weicher Kunststoff für 22
- 25: Platte aus 21
- 26: Innenfläche von 25
- 27: Anschlagelement, randseitiges Element an 25 (Fig. 3)
- 28: Betätigungselement für 17, zentraler Schaft von 25 (Fig. 3)
- 29: verkröpftes Profil von 35, U-Profil
- 30: Kappenform von 20
- 31: Kappenboden von 30
- 32: Kappenmantel von 30 aus 22
- 33: Zentralbereich von 31
- 34: Randzone von 31
- 35: Übergangsbereich zwischen 25, 32
- 36: Rinne von 29 (Fig. 3)
- 37: Bügelmaterial von 10
- 38: Mantelstärke von 32
- 39: Wandstärke von 22
- 40: Sperrplatte
- 41: axiale Schulter für 32 in 13
- 42: Anlagefläche für 32 in 13
- 43: Rastelement (radial federnder Haken)
- 44: Durchbruch im Grund von 13
- 45: Loch in 40 für 43
- 46: Schulter an 10
- 47: Höhenabstand zwischen 17 und 46
- 48: Spalt zwischen 28 und 17

## Patentansprüche

1. Äußerer Türgriff, insbesondere für Fahrzeuge, mit einer Bügel-Handhabe (10).
mit einer Aussparung (13) am Ende der Bügel-Handhabe (10)
und mit einem Druckbetätiger (15) eines elektrischen Schalters (16) od. dgl., der die Form einer Kappe (30) aufweist und in der Aussparung (13) eingelassen ist,
**dadurch gekennzeichnet,**
**dass** der Druckbetätiger (15) ein zusammengesetzter, aus zwei Komponenten (21, 22) bestehender Steckeinsatz ist und einen Kombieinsatz (20) bildet,
**dass** die erste Komponente des Kombieinsatzes (20) eine Platte (25) aus im Wesentlichen hartem, kratzfestem Kunststoffmaterial ist und eine Hartkomponente (21) des Kombieinsatzes (20) bildet,
wobei die Hartkomponente (21) im Zentralbereich (33) des äußeren Kappenbodens (31) angeordnet ist und die nach außen gerichtete Druckbetätigungsstelle in der Bügel-Handhabe (10) bildet,
**dass** die zweite Komponente des Kombieinsatzes (20) aus im Wesentlichen weichem, formelastischem Kunststoffmaterial besteht und eine Weichkomponente (22) des Kombieinsatzes (20) bildet,
**dass** die Weichkomponente (22) sich zwar im Wesentlichen über die ganze Kappe (30) erstreckt, aber im zentralen Bereich (33) des Kappenbodens (31) nur auf der Innenfläche (26) der aus der Hartkomponente (21) gebildeten Platte (25) verläuft,
**dass** der Kombieinsatz (20) im Bereich des Kappenmantels (32) ausschließlich von der Weichkomponente (22) gebildet ist
und **dass** die Weichkomponente (22) im Bereich des Kappenmantels (32) mit radialen Anlageflächen (42), mit axialen Schultern (41) und mit bei der Steckmontage wirksamen Rastelementen (43) versehen ist, welche zum Abstützen und zum Halten des Kombieinsatzes (20) in der Aussparung (13) der Bügel-Handhabe (10) dienen.

2. Türgriff nach Anspruch 1, **dadurch gekennzeichnet, dass** auch noch die Randzone (34) des Kappenbodens (31) ausschließlich aus der Weichkomponente (22) des Kombieinsatzes (20) besteht
und dass diese Randzone (34), nach Art eines Rahmens, die aus der Hartkomponente (21) bestehende Platte (25) allseitig umschließt.

3. Türgriff nach Anspruch 1 oder 2, **dadurch gekennzeichnet, dass** der den Umriss der Platte (25) umgrenzende Übergang (35) zum aus der Weichkomponente (22) bestehenden Kappenrest (32, 34), im Axialschnitt durch die Kappe 30 gesehen, ein verkröpftes Profil (29) aufweist,
welches als elastisch nachgiebige Rückstellfeder für den Druckbetätiger (14) dient.

4. Türgriff nach einem der Ansprüche 1 bis 3, **dadurch gekennzeichnet, dass** die Weichkomponente (22) am Übergang (35) zwischen dem Umriss der Platte (25) und dem Kappenrest (32, 34) eine kleinere Wandstärke (39) aufweist, als im übrigen, unabgedeckt bleibenden Bereich (38) des Kappenmantels (32).

5. Türgriff nach Anspruch 3 oder 4, **dadurch gekennzeichnet, dass** der Übergang (35) aus einer U-Rinne (36) besteht,
welche die Platte (35) ringförmig umschließt und die gegenüber der äußeren Schaufläche des Druckbetätigers (13) abgesenkt ist.

6. Türgriff nach einem der Ansprüche 1 bis 5, **dadurch gekennzeichnet, dass** die Aussparung (13) in der Bügel-Handhabe (10) aus einer ringförmigen Kammer besteht,
deren lichte Kammerweite (19) der Mantelstärke (38) des Kappenmantels so angepasst ist,
dass die dortige Weichkomponente (22) des Kombieinsatzes (20) wenigstens stellenweise im Presssitz aufgenommen ist.

7. Türgriff nach einem der Ansprüche 1 bis 6, **dadurch gekennzeichnet, dass** das am Kappenmantel (32) befindliche Rastelement (43) ein aus der Weichkomponente (22) gebildeter radial federnder Haken ist,
dessen Hakenschaft im Montagefall einen Durchbruch (44) im Grund der Aussparung (13) durchragt und mit einem Hakenkopf in einer Sperrplatte (40) verankert ist.

8. Türgriff nach Anspruch 7, **dadurch gekennzeichnet, dass** die Sperrplatte (40) hinter dem Grund der Aussparung (13) angeordnet ist
und dass die Sperrplatte (40) mit im Montagefall vom Hakenschaft durchsetzten Löchern (45) versehen ist und der Hakenkopf den Lochrand hintergreift.

9. Türgriff nach Anspruch 7 oder 8, **dadurch gekennzeichnet, dass** die Sperrplatte (40) Träger eines Mikroschalters (16) ist, dessen Schaltknopf (17) Bereiche des Kappenbodens untergreift.

10. Türgriff nach Anspruch 9, **dadurch gekennzeichnet, dass** aus der Hartkomponente (21) der schauseitigen Platte (25) Betätigungselemente (28) die Weichkomponente (22) durchragen und mit dem Schaltknopf (17) des Mikroschalters (16) fluchten.

11. Türgriff nach Anspruch 9 oder 10, **dadurch gekennzeichnet, dass** aus der Hartkomponente (21) der schauseitigen Platte (25) Anschlagelemente (27) die Weichkomponente (22) durchragen und mit Schultern (46) der Bügel-Handhabe (10) bei der Betätigung (14) des Druckbetätigers (15) zusammenwirken und die Eindrücklage begrenzen.

## Claims

1. External door handle, in particular for vehicles, with a bow-type grip (10),
with a recess (13) at the end of the bow-type grip (10)
and with a push actuator (15) of an electrical switch (16) or the like, which has the shape of a cap (30) and is let into the recess (13),
**characterised in that**
the push actuator (15) is a composite plug-in insert consisting of two components (21, 22) and forms a combination insert (20),
that the first component of the combination insert (20) is a plate (25) made of substantially hard, scratch-resistant plastic material and forms a hard component (21) of the combination insert (20),
wherein the hard component (21) is arranged in the central area (33) of the outer cap bottom (31) and forms the outwardly directed push-actuation point in the bow-type handle (10),
that the second component of the combination insert (20) consists of substantially soft plastic material of elastic shape and forms a soft component (22) of the combination insert (20),
that although the soft component (22) extends substantially across the entire cap (30), it nevertheless extends, in the central area (33) of the cap bottom (31), only over the inner surface (26) of the plate (25) formed from the hard component (21), that the combination insert (20) is formed, in the area of the cap mantle (32), exclusively by the soft component (22),
and that the soft component (22) is provided, in the area of the cap mantle (32), with radial bearing surfaces (42), with axial shoulders (41) and with latching elements (43) which are operative when plug-in assembly is carried out and serve to support and hold the combination insert (20) in the recess (13) of the bow-type grip (10).

2. Door handle according to claim 1, **characterised in that** the edge zone (34) of the cap bottom (31) also consists exclusively of the soft component (22) of the combination insert (20),
and that this edge zone (34) encloses on all sides, like a frame, the plate (25) consisting of the hard component (21).

3. Door handle according to claim 1 or 2, **characterised in that** the transition (35), which borders the contour of the plate (25), to the remainder (32, 34) of the cap, which remainder consists of the soft component (22), has a bent profile (29) when viewed in axial section through the cap (30),
which profile serves as an elastically yielding restoring spring for the push actuator (14).

4. Door handle according to one of claims 1 to 3, **characterised in that** the soft component (22) has a smaller wall thickness (39) at the transition (35) between the contour of the plate (25) and the remainder (32, 34) of the cap, than in the remaining area (38), which remains uncovered, of the cap mantle (32).

5. Door handle according to claim 3 or 4, **characterised in that** the transition (35) consists of a U-shaped groove (36),
which encloses the plate (35) annularly and is lowered relative to the outer, visible surface of the push actuator (13).

6. Door handle according to one of claims 1 to 5, **characterised in that** the recess (13) in the bow-type grip (10) consists of an annular chamber,
the clear width (19) of which chamber is matched to the thickness (38) of the cap mantle in such a way
that the soft component (22) of the combination insert (20) at that point is received in a press fit, at least in places.

7. Door handle according to one of claims 1 to 6, **characterised in that** the latching element (43) located on the cap mantle (32) is a radially resilient hook which is formed from the soft component (22),
and the shaft of which hook protrudes, when assembly takes place, through a perforation (44) in the base of the recess (13) and is anchored in a blocking plate (40) by means of a head on the hook.

8. Door handle according to claim 7, **characterised in that** the blocking plate (40) is arranged behind the base of the recess (13),
and that the blocking plate (40) is provided with holes (45) which are penetrated by the shaft of the hook when assembly takes place, and the head of the hook engages behind the edge of the hole.

9. Door handle according to claim 7 or 8, **characterised in that** the blocking plate (40) is a carrier for a microswitch (16), the switch button (17) of which engages under areas of the cap bottom.

10. Door handle according to claim 9, **characterised in that** actuating elements (28) protrude through the soft component (22) from the hard component (21) of the plate (25) on the visible side and align with the switch button (17) of the microswitch (16).

11. Door handle according to claim 9 or 10, **characterised in that** stop elements (27) protrude through the soft component (22) from the hard component (21) of the plate (25) on the visible side and interact with shoulders (46) on the bow-type grip (10) upon actuation (14) of the push actuator (15) and limit the pushed-in location.

## Revendications

1. Poignée de portière extérieure, en particulier pour des véhicules, avec une poignée en forme d'étrier (10),
avec un évidement (13) à l'extrémité de la poignée en forme d'étrier (10)
et avec un actionneur à pression (15) d'un interrupteur électrique (16) ou analogue, présentant la forme d' un capuchon (30) et introduit dans l'évidement (13),
**caractérisée en ce que**
l'actionneur à pression (15) est un insert à enfichage, en plusieurs pièces, composé de deux composants (21, 22) et forme un insert combiné (20),
**en ce que** le premier composant de l'insert combiné (20) est une plaque (25) en matériau synthétique résistant aux éraflures, essentiellement dur, et forme un composant dur (21) de l'insert combiné (20),
le composant dur (21) étant disposé dans la zone centrale (33) du fond de capuchon extérieur (31) et forme le point d'actionnement par pression, orienté vers l'extérieur, dans la poignée en forme d'étrier (10),
**en ce que** le deuxième composant de l'insert combiné (20) est formé d'un matériau synthétique essentiellement souple, à élasticité de forme, et forme un composant souple (22) de l'insert combiné (20),
**en ce que** le composant souple (22) s'étend certes sensiblement sur la totalité du capuchon (30) mais, dans la zone centrale (33) du fond de capuchon (31), ne s'étend que sur la face intérieure (26) de la plaque (25), formée à partir du composant dur (21),
**en ce que** l'insert combiné (20), dans la zone de l'enveloppe du capuchon (32), est formé exclusivement par le capuchon souple (22)
et **en ce que** le composant souple (22), dans la zone de l'enveloppe de capuchon (32), est muni de faces de butée radiale (42), d'épaulements axiaux (41) et d'éléments d'encliquetage (43), agissant lors du montage par enfichage, qui servent à offrir l'appui et le maintien de l'insert combiné (20) dans l'évidement (13) de la poignée en forme d'étrier (10).

2. Poignée de portière selon la revendication 1, **caractérisée en ce qu'**également encore la zone de bordure (34) du fond de capuchon (31) est exclusivement formée du composant souple (22) de l'insert combiné (20),
et **en ce que** cette zone de bordure (34) entoure de toute part, à la façon d'un cadre, la plaque (25), formée du composant dur (21).

3. Poignée de portière selon la revendication 1 ou 2, **caractérisée en ce que** la transition (35), entourant le profil de la plaque (25), présente par rapport au reste de capuchon (32, 34), formé du composant souple (22), en observant en coupe axiale à travers le capuchon (30), un profil (29) coudé,
servant de ressort de rappel déformable élastiquement à l'actionneur à pression (14).

4. Poignée de portière selon l'une des revendications 1 à 3, **caractérisée en ce que** le composant souple (22), à la transition (35) entre le profil de la plaque (25) et le reste de capuchon (32, 34), présente une plus petite épaisseur de paroi (39) que dans la zone restante (38), restant non-couverte, de l'enveloppe de capuchon (32).

5. Poignée de portière selon la revendication 3 ou 4, **caractérisée en ce que** la transition (35) est formée d'une goulotte en U (36),
qui entoure en forme d'anneau la plaque (35) et qui est escamotée par rapport à la face visible extérieure de l'actionneur à pression (13).

6. Poignée de portière selon l'une des revendications 1 à 5, **caractérisée en ce que** l'évidement (13), ménagé dans la poignée en forme d'étrier (10), est formé d'une chambre en forme d'anneau,
dont la largeur de chambre libre (19) est adaptée à l'épaisseur d'enveloppe (38) de l'enveloppe de capuchon,
**en ce que** le composant souple (22) de l'insert combiné (20) se trouvant à cet endroit, est logé, au moins par endroits, selon un montage à ajustement avec serrage.

7. Poignée de portière selon l'une des revendications 1 à 6, **caractérisée en ce que** l'élément d'encliquetage (43) se trouvant sur l'enveloppe de capuchon (32) est un crochet élastique radialement, formé à partir du composant souple (22),
dont la tige de crochet, en cas de montage, traverse un passage (44) ménagé dans le fond de l'évidement (13) et est ancrée, par sa tête de crochet, dans une plaque de blocage (40).

8. Poignée de portière selon la revendication 7, **caractérisée en ce que** la plaque de blocage (40) est disposée derrière le fond de l'évidement (13),
et **en ce que** la plaque de blocage (40) est munie de trous (45), qui, en cas de montage, sont traversés par la tige de crochet, et la tête de crochet saisit par l'arrière le bord de trou.

9. Poignée de portière selon la revendication 7 ou 8, **caractérisée en ce que** la plaque de blocage (40) est le support d'un micro-interrupteur (16), dont le bouton de commutation (17) saisit par l'arrière des zones du fond de capuchon.

10. Poignée de portière selon la revendication 9, **caractérisée en ce que** des éléments d'actionnement (28), formés à partir du composant dur (21) de la plaque (25) visible, traversent les composants souples (22) et sont alignés avec le bouton de commutation (17) du micro-interrupteur (16).

11. Poignée de portière selon la revendication 9 ou 10, **caractérisée en ce que** des éléments de butée (27), formés à partir du composant dur (21) de la plaque visible (25), traversent les composants souples (22) et coopèrent avec des épaulements (46) de la poignée en forme d'étrier (10), lors de l'actionnement (14) de l'actionneur à pression (15), et limitent la position enfoncée.
